Europäisches Patentamt

European Patent Office

Office européen des brevets

(19)

(11) **EP 1 223 325 A1**

(12) **DEMANDE DE BREVET EUROPEEN**

(43) Date de publication:
17.07.2002 Bulletin 2002/29

(51) Int Cl.⁷: **F02D 41/04**, F02D 35/00,
B60K 41/00

(21) Numéro de dépôt: 02290067.4

(22) Date de dépôt: 11.01.2002

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **16.01.2001 FR 0100510**

(71) Demandeur: **Renault
92100 Boulogne Billancourt (FR)**

(72) Inventeur: **Aubert, Olivier
92370 Chaville (FR)**

(54) **Système de commande d'un groupe motopropulseur de véhicule automobile**

(57)     La présente invention concerne un système de commande d'un groupe motopropulseur de véhicule automobile.

Selon l'invention, le système de commande comporte un moyen (6) pour détecter l'intention du conducteur et un moyen (7) pour indiquer l'état du véhicule ou de l'environnement du véhicule qui produisent des variables d'état produites en entrée d'un moyen (5) pour calculer une valeur de consigne de puissance du moteur qui est transmise comme variable de charge à un circuit de pilotage électronique (3) des actionneurs (2) d'un moteur (1). L'arbre (4) du moteur (1) est connecté à un dispositif de transmission (8) dont l'état ou le changement d'état est contrôlé ou peut être contrôlé par un dispositif de contrôle d'état (9) et dont une variable de charge peut être constituée par la valeur de consigne de puissance produite par le moyen (5) pour calculer une valeur de consigne de puissance du moteur.

Figure 1

EP 1 223 325 A1

## Description

La présente invention concerne un système de commande d'un groupe motopropulseur de véhicule automobile.

Dans l'état de la technique, on a déjà décrit des systèmes de commande qui permettent de régler le couple produit par le moteur du groupe motopropulseur en fonction de la demande du conducteur, demande exprimée par la manoeuvre d'un levier ou plus classiquement par la pédale d'accélérateur. Dans un tel état de la technique, un contrôleur comporte une mémoire dans laquelle est enregistrée une fonction qui permet de déterminer des paramètres de commande d'actibnneurs du moteur en fonction de la commande reçue de la pédale d'accélérateur et du régime du moteur exprimé par sa vitesse de rotation. Le contrôleur produit en sortie un signal représentatif des paramètres déterminés. Les actionneurs, ayant reçus leurs paramètres de commande, agissent de façon à régler le point de fonctionnement du moteur de sorte qu'il délivre le couple désiré.

Cependant, pour une vitesse donnée du véhicule, l'accélération produite en réponse à une action du conducteur sur la pédale d'accélérateur dépend de l'état de la transmission, du rapport de démultiplication notamment, qui intervient d'abord pour la détermination du régime du moteur qui influe sur le couple produit, et ensuite dans la transformation du couple moteur en accélération du véhicule. En général, lors d'un changement d'état de la transmission, comme un changement de rapport de démultiplication, pour une position donnée de la pédale d'accélérateur, on ne retrouve pas la même accélération résultante du véhicule. Il en résulte une variation imprévue de l'accélération du véhicule.

Pour supprimer l'effet négatif de l'état de la transmission, on a déjà proposé de corriger ce fonctionnement désavantageux en tenant compte du changement d'état de la transmission. A cette fin, on détermine une première relation directe entre la position de la pédale d'accélérateur et une valeur désirée de couple à la roue du véhicule et non plus seulement en sortie du moteur, et une seconde relation entre le couple à la roue et le couple en sortie du moteur qui tient compte du rapport de démultiplication.

Malheureusement, les méthodes permettant d'établir la première et la seconde relations sont difficiles à calibrer et leur application sur un véhicule n'est pas satisfaisante.

D'autre part, dans le cas d'une transmission à rapports étagés, il se produit encore un à-coup lors de la détection du changement d'état de la transmission.

Enfin, dans le cas des transmissions automatiques, le choix du rapport de démultiplication se fait en fonction du choix du conducteur déterminé par la position de la pédale d'accélérateur ou du papillon des gaz. Ces variables n'ayant pas de signification physique directe du point de vue du conducteur, elles ne permettent pas de calibrer par calcul le système de choix le dispositif de choix du rapport de démultiplication.

On a pensé utiliser directement la variable représentative du couple moteur pour déterminer le changement de rapport. Cette méthode ne permet pas de prendre en compte les actions du conducteur dans les régimes de fonctionnement du moteur où la pédale d'accélérateur n'a pas ou peu d'action sur le couple moteur. C'est le cas quand le fonctionnement du moteur est à la saturation au couple maximum ce qui se produit à partir d'un enfoncement de la pédale d'accélérateur assez faible à bas régime.

C'est pour remédier à ces inconvénients de l'état de la technique que la présente invention concerne un système de commande d'un groupe motopropulseur de véhicule automobile du type dans lequel le groupe motopropulseur comporte un moteur dont la puissance ou le couple est réglée par des actionneurs sous le contrôle d'un dispositif de contrôle électronique et dont l'arbre de sortie est connecté mécaniquement à au moins une roue motrice par un dispositif de transmission à état variable, continûment ou par étages, sous la commande d'un dispositif de commande d'état de transmission.

L'invention se caractérise notamment en ce que le système de commande comporte un premier moyen pour détecter l'environnement du véhicule, un second moyen pour déterminer l'intention du conducteur et un moyen pour déterminer une consigne de puissance ou de couple moteur qui est ensuite convertie en signaux de commande pour les actionneurs du moteur en fonction de l'environnement du véhicule et de l'intention du conducteur.

Selon un autre aspect de l'invention, le dispositif de commande d'état de transmission est préférentiellement un dispositif de changement d'état de transmission qui reçoit une valeur de consigne de puissance moteur comme variable de charge.

Selon un autre aspect de l'invention, le système de commande comporte un premier processeur d'une consigne de puissance en fonction du signal de commande issu d'organes de commande qui exécutent une action du conducteur, et du signal représentatif de l'état du véhicule issu d'organes de mesure de l'état du véhicule.

Selon un autre aspect de l'invention, le système de commande comporte un second processeur d'arbitrage avec les valeurs de consigne de puissance du moteur issues des systèmes de contrôle de trajectoire et de la transmission automatique et avec la valeur de consigne issue du premier processeur.

Selon un autre aspect de l'invention, le système de commande comporte un troisième processeur qui comporte un moyen de prise en compte des puissances prélevées par l'ensemble des dispositifs consommateurs de puissance et qui reçoit aussi sur une entrée la valeur de consigne de puissance arbitrée issue du second processeur.

Selon un autre aspect de l'invention, le système de commande comporte un circuit de pilotage des actionneurs du moteur qui produit des signaux de commande transmis aux actionneurs.

Selon un autre aspect de l'invention, les processeurs et le circuit de pilotage comportent au moins l'un des moyens suivants :

- un moyen enregistrant une table de valeurs de consigne de puissance du moteur adressée en fonction des signaux d'entrée des processeurs et/ou du circuit de pilotage et un moyen pour produire en réponse ladite valeur de consigne en sortie dudit processeur ou circuit de pilotage ;
- un moyen pour générer une fonction préprogrammé qui pour un ensemble de variables descriptives reçues en entrée dudit processeur et/ou dudit circuit de pilotage élabore à une date donnée une valeur de consigne de puissance.

Selon un autre aspect de l'invention, le système de commande comporte un organe de sélection commandé par un moyen d'indication de l'état d'activation de systèmes d'aide à la conduite et qui sélectionne selon un degré de priorité prédéterminé l'une des valeurs de consigne produites par :

- un processeur de puissance moteur demandée par le conducteur qui reçoit en entrée une indication du régime moteur et une indication de l'intention du conducteur ;
- un Régulateur-limiteur de vitesse de véhicule qui reçoit en entrée une mesure de vitesse mesurée et une indication de vitesse de consigne (31) ;
- un Régulateur-limiteur de distance du véhicule qui reçoit en entrée une mesure de distance parcourue et une indication de distance de consigne ; de sorte que soit produite en sortie de l'organe de sélection une valeur instantanée de consigne de puissance destinée à satisfaire la demande du conducteur ou des systèmes d'aide à la conduite.

Selon un autre aspect de l'invention, le système de commande comporte :

- un premier contrôleur dont une seconde entrée reçoit la valeur instantanée de consigne d'augmentation de puissance produite par un dispositif de calcul d'un système de contrôle de trajectoire, une seconde entrée la valeur de consigne de puissance issue de l'organe de sélection, et dont la sortie réalise, par l'opération de prendre à chaque instant la plus petite des valeurs présentées à ses deux entrées une première valeur de consigne de puissance ;
- un second contrôleur dont une première entrée reçoit le signal de sortie du premier contrôleur et dont une seconde entrée reçoit la valeur instantanée de consigne de réduction de puissance produite par un dispositif de calcul du système de contrôle de trajectoire et dont la sortie réalise, par l'opération de prendre à chaque instant la plus grande des valeurs présentées à ses deux entrées, une seconde valeur de consigne de puissance ;
- un organe de sélection dont une première entrée reçoit le signal de sortie du second contrôleur et dont une seconde entrée reçoit la valeur instantanée de consigne de puissance moteur nécessaire pour effectuer de manière convenable le changement d'état du dispositif de transmission, un dispositif indicateur du changement d'état permettant de commander la position de sélection de l'organe de sélection de sorte que sa première entrée soit transmise à sa sortie quand le dispositif de transmission ne change pas d'état, et que sa seconde entrée soit transmise à sa sortie quand le dispositif de transmission change d'état ; de sorte que soit produit en sortie une valeur de consigne de puissance arbitrée.

Selon un autre aspect de l'invention, le système de commande comporte aussi un troisième contrôleur qui reçoit sur une première entrée la valeur de consigne arbitrée issue de l'organe de sélection et qui reçoit sur une seconde entrée l'ensemble des variables représentatives des puissances consommées par les dispositifs auxiliaires et qui réalise la pondération et préférentiellement la sommation des puissances consommées et de la puissance demandée et produit en sortie un signal de consigne de puissance moteur.

Selon un autre aspect de l'invention, le système de commande comporte aussi un moyen de conversion d'une valeur de consigne de puissance en valeur de couple moteur qui comporte un circuit pour réaliser le rapport $\frac{Consigne\_de\_puissance}{Régime\_moteur} = Consigne\_de\_couple$ de sorte qu'une valeur convertie soit fournie comme variable de charge aux actionneurs du moteur.

D'autres avantages et caractéristiques de la présente invention seront mieux compris à l'aide de la description et des dessins dans lesquels :

- la figure 1 est un schéma représentant le groupe motopropulseur équipé du système de commande de l'invention ;
- la figure 2 est un schéma bloc d'un mode de réalisation du système de commande de la Figure 1 ;
- la figure 3 est un schéma bloc d'une première partie d'un autre mode de réalisation du système de commande de la Figure 1 ;
- la figure 4 est un schéma bloc d'une seconde partie d'un autre mode de réalisation du système de commande de la Figure 1 ;
- la figure 5 est un schéma bloc d'une troisième partie d'un autre mode de réalisation du système de commande de la Figure 1.

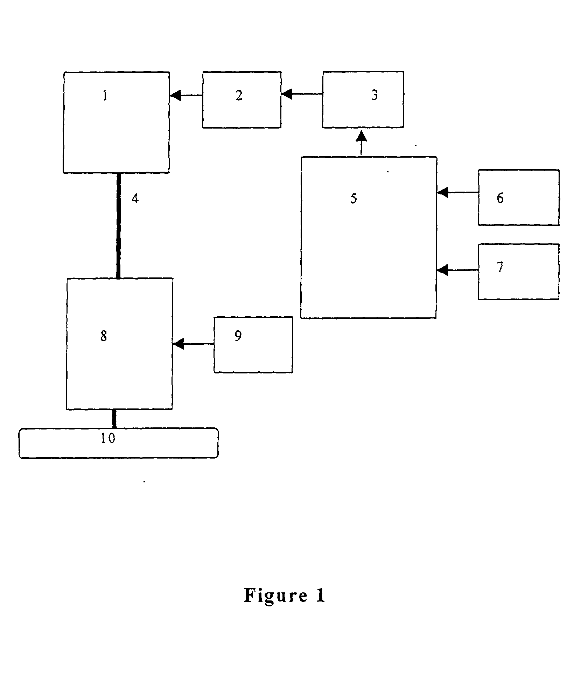

A la figure 1, on a représenté un schéma représentant le groupe motopropulseur équipé du système de commande de l'invention. Le moteur 1 comporte un arbre de sortie 4 qui produit sous un régime moteur déterminé par sa vitesse de rotation un couple moteur ou puissance moteur. L'arbre de sortie 4 du moteur 1 est connecté au primaire d'un dispositif de transmission à état variable 8 dont le secondaire est connecté à un train de roues motrices 10.

Le moteur utilisé 1 dans le groupe motopropulseur peut être de tout type : à essence, diesel, hybride ou électrique. Sa charge ou couple délivré est pilotée par un système de contrôle électronique comportant un calculateur électronique 3 et des actionneurs 2 qui peuvent être de tous types comme ceux utilisés pour l'allumage piloté ou l'injection pilotée.

Le dispositif de transmission 8 utilisé dans le groupe motopropulseur peut être de tout type à commande manuelle par levier de changement de vitesses ou à commande automatique par boîte de vitesses automatique ou par boîte de vitesses robotisée ou autre. Le changement d'état du dispositif de transmission 8 est assuré par l'action d'un dispositif de contrôle du changement d'état 9, essentiellement dans le cas d'une commande automatique.

Le système de commande 5-7 de l'invention comporte divers moyens qui concourent à élaborer un signal de consigne de puissance du moteur 1 à partir des actions du conducteur sur divers organes de commande ou définies à partir de la détection de situations de conduite prédéterminées, et de l'observation de l'état et de l'environnement du véhicule.

A la figure 1, le système de commande comporte un moyen 6 pour détecter l'intention du conducteur et un moyen 7 pour détecter l'état de l'environnement du véhicule. Les signaux produits par les moyens 6 pour détecter l'intention du conducteur et 7 pour détecter l'état de l'environnement du véhicule sont transmis à l'entrée d'un moyen 5 pour déterminer une consigne de puissance ou de couple moteur qui est ensuite convertie en signaux de commande pour les actionneurs 3 du moteur 1 en fonction de l'environnement du véhicule et de l'intention du conducteur.

A cette fin, le moyen 5 pour déterminer une consigne de puissance ou de couple moteur détermine les besoins de puissance propres à satisfaire par priorités décroissantes : l'intention du conducteur et l'environnement du véhicule. La consigne de puissance est construite dans une gamme de puissances allant jusqu'à la puissance maximale absolue du moteur 1. Cette consigne est d'abord déterminée sans tenir compte des limitations découlant de l'environnement du véhicule. En pratique les limitations découlant de l'environnement du véhicule concernent essentiellement la vitesse du véhicule et le rapport de démultiplication du dispositif de transmission 8 qui permettent de fixer le régime du moteur 1, par exemple exprimé en vitesse de rotation, et donc de déterminer le couple moteur et la puissance maximale disponibles.

Ce signal de consigne peut, dans un mode particulier de réalisation, être transmis au dispositif de contrôle 9 du changement d'état du dispositif de transmission 8, dans le cas d'une commande automatique de façon à déterminer, en fonction des situations possibles déterminées a priori dans le dispositif de contrôle 9, la valeur instantanée du rapport de démultiplication à appliquer sur le dispositif de transmission 8. Une telle consigne sert donc de variable de charge en entrée du dispositif de changement d'état 9 du dispositif de transmission 8.

Le moyen 7 pour détecter l'environnement du véhicule peut aussi comporter des systèmes d'aide à la conduite et plus généralement des systèmes susceptibles de commander le fonctionnement du moteur 1 comme des systèmes de contrôle de trajectoires ou des systèmes de transmission automatique.

Le moyen 7 pour détecter l'environnement du véhicule comporte aussi les divers organes du véhicule qui sont consommateurs de la puissance délivrée par le moteur 1 comme l'alternateur, la climatisation de l'habitacle du véhicule, etc. Dans un mode particulier de réalisation, le moyen 7 pour détecter l'état de l'environnement du véhicule comporte aussi un calculateur qui exécute un modèle des diverses pertes de puissance introduites dans la chaîne consommatrice de la puissance moteur, et notamment les pertes dans le dispositif de transmission, le glissement sur la route, etc.

Le moyen 5 pour déterminer une consigne de puissance ou de couple moteur produit alors un signal de consigne qui sert de référence au calculateur 3 qui réalise classiquement le pilotage des actionneurs 2 du moteur 1 afin d'assurer la production du couple ou de la puissance du moteur 1 nécessaires à l'objectif déterminé à l'aide des moyens 6 et 7.

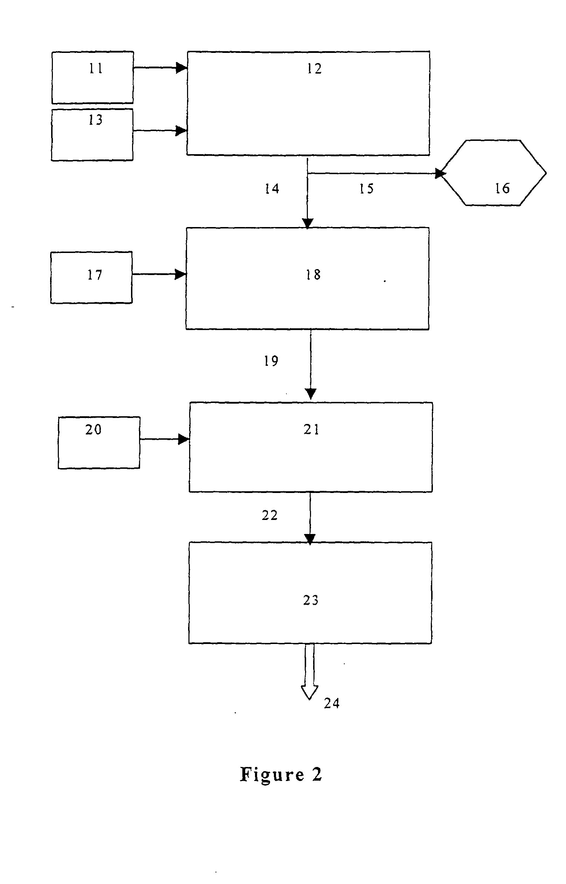

A la figure 2, on a représenté un schéma bloc d'un mode de réalisation du système de commande de la figure 1. A la figure 1, un processeur 12 d'une première consigne de puissance reçoit les variables descriptives reçues des organes de commande 11 quand ils exécutent une action du conducteur, et des capteurs 13 de l'état du véhicule qui permettent de connaître son environnement. Le processeur 12 comporte une mémoire dans laquelle est enregistrée une table permettant de produire une valeur de consigne de puissance destinée à satisfaire la demande du conducteur et des systèmes d'aide à la conduite en fonction des variables descriptives reçues des organes de commande 11 et des capteurs 13. Au cours de l'utilisation du véhicule, les signaux représentatifs de l'évolution de la valeur de consigne produite par le processeur 12 sont transmises en sortie 14 du processeur 12 vers une entrée convenable d'un second processeur 18 qui implémente un arbitrage avec les autres consignes de puissance du véhicule.

Dans un autre mode de réalisation, le processeur 12 au lieu de comporter une mémoire enregistrant une table de valeurs, comporte un générateur de fonction préprogrammé qui, pour un ensemble de variables descriptives reçues des organes de commande 11 et des capteurs 13 reçu à une date donnée, élabore une valeur de consigne de puissance destinée à satisfaire la demande du conducteur et des systèmes d'aide à la conduite.

Dans un autre mode de réalisation, le premier processeur 12 élabore aussi un signal de commande 15 à destination d'une entrée de variable de charge 16 du dispositif de contrôle 9 du changement d'état du dispositif de transmission 8 quand celui-ci est de type automatique. De cette manière, le choix de la puissance à produire sur le moteur permet d'optimiser le rapport de démultiplication en fonction de la puissance disponible et de l'état de saturation éventuel du moteur, de façon à réduire les à-coups dans la conduite du véhicule.

Le second processeur 18 reçoit sur une seconde entrée appropriée l'ensemble des consignes en puissance moteur, valeurs qui peuvent être exprimées en valeurs de couple moteur, issues des systèmes de contrôle de trajectoire et de la transmission automatique. Ils sont ensemble désignés par la référence 17 au dessin.

Le second processeur 18 réalise un arbitrage entre les différentes consignes produites sur ses entrées de sorte que selon les situations de conduite et la configuration du véhicule soit la demande de puissance plutôt issue de l'intention du conducteur (entrée 14) soit la demande de puissance issue des dispositifs automatique ou programmé 17 soit prise en compte.

La valeur instantanée de sortie du second processeur 18 qui représente une valeur de consigne de puissance arbitrée, est transmise à une première entrée 19 convenable d'un troisième processeur 21 qui comporte un moyen de prise en compte des puissances prélevées par l'ensemble des dispositifs consommateurs de puissance dans le véhicule comme l'alternateur ou la climatisation. L'indication instantanée des valeurs de puissance consommée est produite par un ensemble de capteurs ou de moyens indicateurs de cette puissance associés à chacun des dispositifs consommateurs et provient d'un moyen indicateur 20.

Le troisième processeur 21 produit à chaque instant une valeur de consigne de la puissance finale sur une sortie convenable 22 qui est transmise à un circuit de pilotage 23 des actionneurs du moteur sous forme de signaux de commande 24 transmis aux actionneurs en fonction de leurs particularités ainsi qu'il est connu de l'homme de métier.

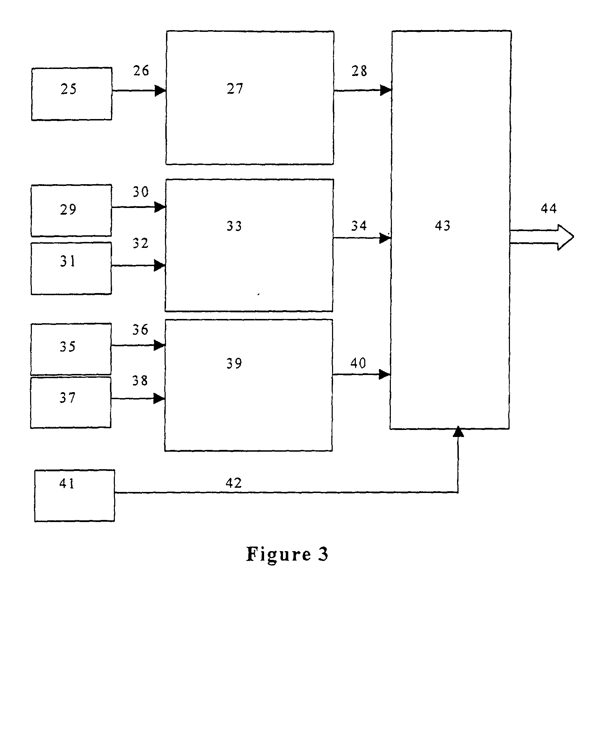

A la figure 3, on a représenté un schéma bloc d'une première partie d'un autre mode de réalisation du système de commande de la Figure 1.

A la figure 3, un organe de sélection 43 permet de déterminer le choix de la consigne de puissance élaborée à partir du moyen 5 déterminant l'intention du conducteur ou des divers systèmes d'aide à la conduite, en fonction de l'indication de l'état d'activation 38 des divers boutons d'activation 37 des systèmes d'aide à la conduite. En particulier, si aucun bouton d'activation de système d'aide à la conduite, seule l'intention du conducteur sera prise en compte par l'organe de sélection 43. A l'inverse, si les boutons de sélection 41 des systèmes d'aide à la conduite leur confère la plus haute priorité, seule la valeur de consigne issue des régulateurs-limiteurs 33 et 39 sera prise en compte par l'organe de sélection 43.

A la figure 3, le degré d'enfoncement de la pédale d'accélérateur ou de tout autre dispositif de demande manuelle de puissance moteur 25 est transmise en entrée 26 d'un processeur 27 de puissance moteur demandée par le conducteur dont la sortie 23 est connectée à l'entrée convenable de l'organe de sélection 43. Le processeur 27 fonctionne selon l'un ou l'autre des principes décrits en relation avec le processeur 12 du mode de réalisation de la figure 2.

Dans un mode préféré de réalisation, la table de valeurs de consigne de puissance demandée par le conducteur, ou le générateur de fonction de consigne de puissance demandée par le conducteur travaille avec deux variables d'entrée qui sont :

- comme précédemment, la position de la pédale d'accélérateur indiquée par lé capteur 25 ;
- mais en plus, la mesure instantanée de la vitesse du véhicule. Le processeur de consigne de puissance demandée élabore alors une valeur de consigne en fonction de ces deux variables d'entrée.

Le Régulateur-limiteur de vitesse 33 reçoit sur une première entrée 30 un signal représentatif de la mesure instantanée de la vitesse du véhicule mesurée par un capteur de vitesse de véhicule 29. Il reçoit sur une seconde entrée 32 un signal indicateur d'une vitesse de consigne déterminée par un organe 31 de fixation d'une vitesse de consigne.

Le Régulateur-limiteur 33 de vitesse du véhicule élabore en fonction des valeurs de ses deux entrées 30 et 32 une valeur de consigne de puissance calculée qui est transmise à l'entrée 26 convenable de l'organe de sélection 43. Le Régulateur-limiteur 33 de vitesse du véhicule comporte selon les variantes :

- ou bien une table de valeurs de consigne de puissance adressées par les valeurs de variables d'entrée 29 de vitesse mesurée ou31 de consigne de vitesses ;
- ou bien un générateur de fonction de consigne de puissance dont les arguments sont les valeurs de variables d'entrée 29 de vitesse mesurée et 31 de consigne de vitesses.

Le Régulateur-limiteur de distance 39 reçoit sur une première entrée 36 un signal représentatif de la mesure instantanée de la distance parcourue par le véhicule mesurée par un capteur de distance parcourue 35. Il reçoit sur une seconde entrée 38 un signal indicateur d'une distance de consigne déterminée par un organe 37 de fixation d'une distance de consigne.

Le Régulateur-limiteur 39 de distance du véhicule élabore en fonction des valeurs de ses deux entrées 36 et 38 une valeur de consigne de puissance calculée qui est transmise à l'entrée 40 convenable de l'organe de sélection 43. Le Régulateur-limiteur 39 de vitesse du véhicule comporte selon les variantes :

- ou bien une table de valeurs de consigne de puissance adressées par les valeurs de variables d'entrée 36 de distance mesurée ou 38 de consigne de distance ;
- ou bien un générateur de fonction de consigne de puissance dont les arguments sont les valeurs de variables d'entrée 36 de distance mesurée et 38 de consigne de distance.

L'organe de sélection 43 produit en sortie une valeur instantanée de consigne de puissance destinée à satisfaire la demande du conducteur ou des systèmes d'aide à la conduite sur sa sortie 44.

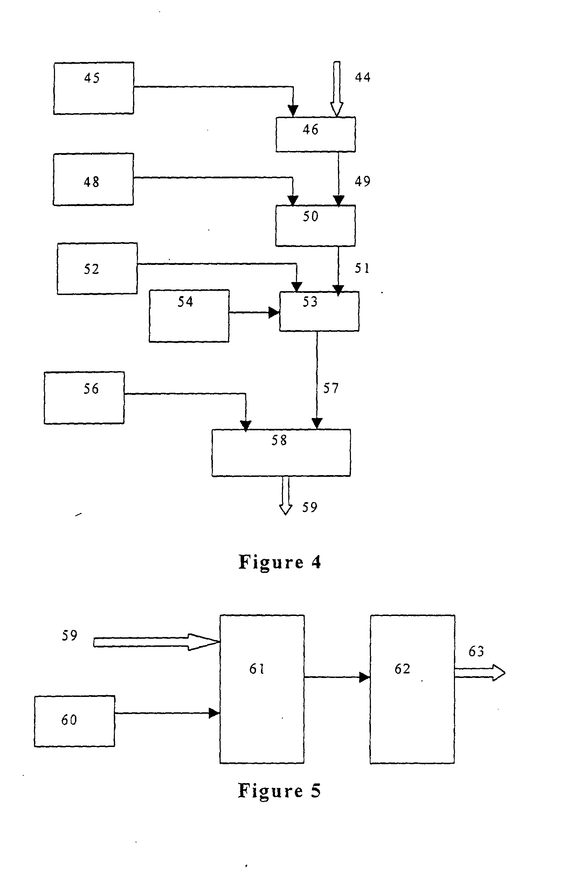

A la figure 4, on a représenté un schéma bloc d'une seconde partie d'un autre mode de réalisation du système de commande de la Figure 1.

Dans le système de commande selon l'invention tel que représenté partiellement à la figure 4, la valeur de consigne de puissance 44 issue de l'organe de sélection 43 de la première partie représentée à la figure 3 est transmise en entrée d'un premier contrôleur 46 dont une seconde entrée reçoit la valeur instantanée de consigne d'augmentation de puissance produite par un dispositif de calcul 45 d'un système de contrôle de trajectoire (non représenté). Le contrôleur 46 réalise l'opération de prendre à chaque instant la plus petite des valeurs présentées à ses deux entrées et produit en sortie une valeur de consigne de puissance qui est transmise à la première entrée 49 d'un second contrôleur 50 dont une seconde entrée reçoit la valeur instantanée de consigne de réduction de puissance produite par un dispositif de calcul 48 du système de contrôle de trajectoire (non représenté). Le contrôleur 50 réalise l'opération de prendre à chaque instant la plus grande des valeurs présentées à ses deux entrées et produit en sortie une valeur de consigne de puissance qui est transmise à la première entrée 51 d'un organe de sélection 53 dont une seconde entrée reçoit la valeur instantanée de consigne de puissance moteur nécessaire pour effectuer de manière convenable le changement d'état du dispositif de transmission. Cette valeur de consigne de puissance est élaborée par un dispositif de calcul 52 interne au dispositif de changement d'état 9 (figure 1). Le dispositif de calcul 52 permet de disposer pendant le changement d'état de la puissance moteur nécessaire pour éviter notamment les à-coups dans le fonctionnement du véhicule. Le dispositif de changement d'état 9 (figure 1) comporte aussi un dispositif 54 indicateur du changement d'état qui permet de commander la position de sélection de l'organe de sélection 53 de sorte que sa première entrée 51 soit transmise à sa sortie 57 quand le dispositif de transmission ne change pas d'état, et que sa seconde entrée 52 soit transmise à sa sortie 57 quand le dispositif de transmission change d'état, c'est-à-dire lorsqu'un changement de rapport de démultiplication est en cours. L'organe de sélection 53 produit en sortie une valeur de consigne de puissance arbitrée qui est transmise à la première entrée 57 d'un troisième contrôleur 58 qui reçoit sur sa seconde entrée l'ensemble des variables représentatives des puissances consommées par les dispositifs auxiliaires 56 comme la climatisation de l'habitacle, l'alternateur ou encore le convertisseur de couple selon leur présence dans la configuration du véhicule. Le troisième contrôleur 58 réalise la pondération et préférentiellement la sommation des puissances consommées 56 et de la puissance demandée 57 et produit en sortie un signal de consigne de puissance moteur 59.

A la figure 5, on a représenté un schéma bloc d'une troisième partie d'un autre mode de réalisation du système de commande de la figure 1.

A la figure 5, on a représenté un moyen de conversion de la consigne de puissance en couple moteur pour assurer la compatibilité de la commande effectuée par le système de l'invention avec le mode de travail des actionneurs 2 du moteur 1. Le moyen de conversion dans le mode préféré de réalisation de la Figure 5 comporte un opérateur 61 dont une première entrée reçoit le signal représentatif de la consigne de puissance moteur issue du troisième contrôleur 58 de la figure 4, et dont une seconde entrée reçoit le signal représentatif du régime moteur issu d'un moyen d'indication du régime moteur 60. Dans le mode préféré de réalisation, le moyen 60 d'indication du régime moteur est constitué par un capteur de vitesse de rotation en sortie de l'arbre moteur 4 du moteur 1 (figure 1).

L'opérateur 61 réalise la division de la valeur instantanée sur sa première entrée par la valeur instantanée sur sa seconde entrée selon l'opération :

$$\frac{Consigne\_de\_puissance(59)}{Régime\_moteur(60)} = Consigne\_de\_couple$$

et transmet à sa sortie une valeur de consigne de couple moteur qui est directement entrée comme variable de charge sur le circuit de pilotage 62 des actionneurs 2 du moteur 1, dont le signal de pilotage 63 leur est fourni selon des modalités propres à chaque actionneur selon les connaissances de l'home de métier.

Dans le mode préféré de réalisation de l'invention, il est ainsi possible de réaliser la construction d'une consigne de puissance allant jusqu'à la puissance maximum absolue du moteur 1 même si le régime du moteur (vitesse de rotation) ne rend pas cette puissance disponible.

Par ailleurs, une variable de charge du dispositif de changement d'état de la transmission est disponible alors que la consigne de puissance n'est jamais saturée.

Enfin, la consigne de puissance élaborée est facilement convertible en consigne de couple à destination des actionneurs 2 du moteur 1 qui travaillent plus facilement en fonction d'un couple moteur.

Le système de commande de l'invention permet d'obtenir une accélération du véhicule indépendante de l'état de la transmission tant que l'état du véhicule (son environnement) et de sa transmission ne viennent pas empêcher de satisfaire la consigne de puissance. Ceci serait le cas si le véhicule fonctionnait à un régime moteur trop faible, pour lequel la puissance demandée ne peut pas être fournie. Cette commande du fonctionnement est rendue possible sans connaissance de l'état de la transmission, sans calibration et quelque soit le genre de transmission.

En particulier, lors d'un changement d'état d'une transmission automatique à rapports étagés, si le conducteur n'agit pas sur les organes de commande (cas d'un pied stable sur la pédale d'accélérateur électrique), le conducteur retrouve la même valeur d'accélération du véhicule avant et après le changement d'état de la transmission.

Pour arriver à la conservation de la puissance moteur, le couple moteur suit une évolution continue inverse à celle du régime moteur (vitesse de rotation). La continuité de l'accélération lors d'un changement d'état d'une transmission à rapports étagés se fait donc sans à-coups, contrairement à ce qui se produit avec les systèmes de commande prenant en compte de façon discrète (discontinue, à des intervalles de temps prédéterminés) l'état de la transmission dans la commande du couple moteur.

La consigne de puissance ne prenant pas en compte la limitation de puissance du moteur, est une variable de charge utilisable pour le choix du rapport de démultiplication par un dispositif de changement 9 d'état de transmission car elle a une signification physique dont la calibration est possible par le dispositif de changement d'état 9. Cette variable de charge permet de prendre en compte les actions du conducteur même lorsqu'elles sont sans effet sur le couple moteur par exemple quand la consigne de puissance est supérieure à la puissance réellement disponible.

Dans le cas d'une transmission à embrayage mécanique et avec une pédale d'accélérateur, le système de commande de l'invention facilite la gestion combinée des deux pédales de commande du conducteur (accélérateur et embrayage) en phase de décollage. En effet, la pédale d'accélérateur réglant la puissance du moteur, lorsque le conducteur relâche la pédale d'embrayage, la chute de régime moteur résultante provoque une augmentation de couple moteur réduisant les risques de calage du moteur.

**Revendications**

**1.** Système de commande d'un groupe motopropulseur de véhicule automobile du type dans lequel le groupe motopropulseur comporte un moteur (1) dont la puissance ou le couple est réglée par des actionneurs (2) sous le contrôle d'un dispositif de contrôle électronique (3) et dont l'arbre de sortie (4) est connecté mécaniquement à au moins une roue motrice (10) par un dispositif de transmission (8) à état variable, continûment ou par étages, sous la commande d'un dispositif de commande d'état de transmission (9), **caractérisé en ce que** le système de commande comporte un premier moyen (7) pour détecter l'environnement du véhicule, un second moyen (6) pour déterminer l'intention du conducteur et un moyen (5) pour déterminer une consigne de puissance ou de couple moteur qui est ensuite convertie en signaux de commande pour les actionneurs (2) du moteur (1) en fonction de l'environnement du véhicule et de l'intention du conducteur.

**2.** Système selon la revendication 1, **caractérisé en ce que** le dispositif de commande d'état de transmission est préférentiellement un dispositif de changement (9) d'état de transmission qui reçoit une valeur de consigne de puissance moteur (15) comme variable de charge (16).

**3.** Système selon la revendication 1 ou 2, **caractérisé en ce que** il comporte un premier processeur (12) d'une consigne de puissance en fonction du signal de commande issu d'organes de commande (11) qui exécutent une action du conducteur, et du signal représentatif de l'état du véhicule issu d'organes de mesure (13) de l'état du véhicule.

**4.** Système selon la revendication 3, **caractérisé en ce qu'**il comporte un second processeur (12) d'arbitrage avec les valeurs de consigne de puissance du moteur issues des systèmes de contrôle de trajectoire et de la transmission automatique (17) et avec la valeur de consigne (14) issue du premier processeur (12).

**5.** Système selon la revendication 4, **caractérisé en ce qu'**il comporte un troisième processeur (21) qui comporte un moyen de prise en compte des puissances prélevées par l'ensemble des dispositifs consommateurs de puissance (17) et qui reçoit aussi sur une entrée (19) la valeur de consigne de puissance arbitrée issue du second processeur (18).

**6.** Système selon la revendication 5, **caractérisé en ce qu'**il comporte un circuit de pilotage (23) des actionneurs (2) du moteur (1) qui produit des signaux de commande (24) transmis aux actionneurs.

**7.** Système selon l'une des revendications 3, 4 ou 6, **caractérisé en ce que** les processeurs (12, 18, 21) et le circuit de pilotage (23) comportent au moins l'un des moyens suivants :

- un moyen enregistrant une table de valeurs de consigne de puissance du moteur adressée en fonction des signaux d'entrée des processeurs et/ou du circuit de pilotage et un moyen pour produire en réponse ladite valeur de consigne en sortie dudit processeur ou circuit de pilotage ;
- un moyen pour générer une fonction préprogrammé qui pour un ensemble de variables descriptives reçues en entrée dudit processeur et/ou dudit circuit de pilotage élabore à une date donnée une valeur de consigne de puissance.

8. Système selon la revendication 1, **caractérisé en ce qu'**il comporte un organe de sélection (43) commandé par un moyen d'indication (41) de l'état d'activation de systèmes d'aide à la conduite et qui sélectionne selon un degré de priorité prédéterminé l'une des valeurs de consigne produites par :

- un processeur (27) de puissance moteur demandée par le conducteur qui reçoit en entrée une indication du régime moteur et une indication de l'intention du conducteur ;
- un Régulateur-limiteur (33) de vitesse de véhicule qui reçoit en entrée une mesure de vitesse mesurée (29) et une indication de vitesse de consigne (31) ;
- un Régulateur-limiteur (39) de distance du véhicule qui reçoit en entrée une mesure de distance parcourue (35) et une indication de distance de consigne (37) ;

de sorte que soit produite en sortie (44) de l'organe de sélection (43) une valeur instantanée de consigne de puissance destinée à satisfaire la demande du conducteur ou des systèmes d'aide à la conduite.

9. Système selon la revendication 8, **caractérisé en ce qu'**il comporte :

- un premier contrôleur (46) dont une seconde entrée reçoit la valeur instantanée de consigne d'augmentation de puissance produite par un dispositif de calcul (45) d'un système de contrôle de trajectoire, une seconde entrée la valeur de consigne de puissance (44) issue de l'organe de sélection (43), et dont la sortie réalise, par l'opération de prendre à chaque instant la plus petite des valeurs présentées à ses deux entrées une première valeur de consigne de puissance ;
- un second contrôleur (50) dont une première entrée 49 reçoit le signal de sortie du premier contrôleur (46) et dont une seconde entrée reçoit la valeur instantanée de consigne de réduction de puissance produite par un dispositif de calcul (48) du système de contrôle de trajectoire et dont la sortie réalise, par l'opération de prendre à chaque instant la plus grande des valeurs présentées à ses deux entrées, une seconde valeur de consigne de puissance

- un organe de sélection (53) dont une première entrée (51) reçoit le signal de sortie du second contrôleur (50) et dont une seconde entrée reçoit la valeur instantanée de consigne de puissance moteur nécessaire pour effectuer de manière convenable le changement d'état du dispositif de transmission, un dispositif (54) indicateur du changement d'état permettant de commander la position de sélection de l'organe de sélection (53) de sorte que sa première entrée (51) soit transmise à sa sortie (57) quand le dispositif de transmission ne change pas d'état, et que sa seconde entrée (52) soit transmise à sa sortie (57) quand le dispositif de transmission change d'état ;
de sorte que soit produit en sortie une valeur de consigne de puissance arbitrée.

10. Système selon la revendication 9, **caractérisé en ce qu'**il comporte aussi un troisième contrôleur (58) qui reçoit sur une première entrée (57) la valeur de consigne arbitrée issue de l'organe de sélection (53) et qui reçoit sur une seconde entrée l'ensemble des variables représentatives des puissances consommées par les dispositifs auxiliaires (56) et qui réalise la pondération et préférentiellement la sommation des puissances consommées (56) et de la puissance demandée (57) et produit en sortie un signal de consigne de puissance moteur (59).

11. Système selon la revendication 9, **caractérisé en ce qu'**il comporte aussi un moyen de conversion d'une valeur de consigne de puissance en valeur de couple moteur qui comporte un circuit (61) pour réaliser le rapport $\frac{Consigne\_de\_puissance}{R\acute{e}gime\_moteur} = Consigne\_de\_couple$ de sorte qu'une valeur convertie soit fournie comme variable de charge aux actionneurs (2) du moteur (1).

Figure 1

Figure 2

Figure 3

Figure 4

Figure 5

**Office européen des brevets**

# RAPPORT DE RECHERCHE EUROPEENNE

Numéro de la demande

EP 02 29 0067

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 893 526 A (TOKORO SETSUO) 16 janvier 1990 (1990-01-16) | 1-4,7 | F02D41/04 F02D35/00 |
| Y | * colonne 1, ligne 5 - colonne 2, ligne 27 * * colonne 5, ligne 30 - colonne 7, ligne 22 * * figures 3-7 * | 5,6,8-11 | B60K41/00 |
| Y | WO 99 13207 A (BOSCH GMBH ROBERT ;BAUER TORSTEN (DE); STREIB MARTIN (DE)) 18 mars 1999 (1999-03-18) * le document en entier * | 5,6,8-11 | |
| X | WO 01 02210 A (FIAT RICERCHE ;PORTA ATTILIO (IT); ELLENA GIOVANNI (IT); LUPO MASS) 11 janvier 2001 (2001-01-11) * abrégé * * revendications; figures 1,2,5,8 * | 1-3,7 | |
| X | US 6 068 574 A (SAMUELSEN DIRK ET AL) 30 mai 2000 (2000-05-30) | 1 | |
| A | * le document en entier * | 2-11 | DOMAINES TECHNIQUES RECHERCHES (Int.Cl.7) F02D B60K |
| X | US 6 064 934 A (ZHANG HONG) 16 mai 2000 (2000-05-16) | 1 | |
| A | * le document en entier * | 2-11 | |
| A | US 5 484 351 A (STREIB MARTIN ET AL) 16 janvier 1996 (1996-01-16) * le document en entier * | 1-11 | |

Le présent rapport a été établi pour toutes les revendications

| Lieu de la recherche | Date d'achèvement de la recherche | Examinateur |
|---|---|---|
| LA HAYE | 23 avril 2002 | Libeaut, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**     EP 02 29 0067

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-04-2002

| Document brevet cité au rapport de recherche | | Date de publication | Membre(s) de la famille de brevet(s) | | Date de publication |
|---|---|---|---|---|---|
| US 4893526 | A | 16-01-1990 | JP | 63074733 A | 05-04-1988 |
| | | | JP | 63074734 A | 05-04-1988 |
| | | | JP | 63090447 A | 21-04-1988 |
| | | | JP | 63090448 A | 21-04-1988 |
| | | | JP | 63090449 A | 21-04-1988 |
| WO 9913207 | A | 18-03-1999 | DE | 19739564 A1 | 11-03-1999 |
| | | | WO | 9913207 A1 | 18-03-1999 |
| | | | EP | 0937198 A1 | 25-08-1999 |
| | | | JP | 2001504918 T | 10-04-2001 |
| | | | US | 6223721 B1 | 01-05-2001 |
| WO 0102210 | A | 11-01-2001 | IT | TO990579 A1 | 05-01-2001 |
| | | | WO | 0102210 A1 | 11-01-2001 |
| US 6068574 | A | 30-05-2000 | DE | 19644881 A1 | 30-04-1998 |
| | | | JP | 10141103 A | 26-05-1998 |
| US 6064934 | A | 16-05-2000 | DE | 19611839 A1 | 02-10-1997 |
| | | | WO | 9735739 A1 | 02-10-1997 |
| | | | DE | 59704847 D1 | 15-11-2001 |
| | | | EP | 0828628 A1 | 18-03-1998 |
| | | | JP | 11507117 T | 22-06-1999 |
| US 5484351 | A | 16-01-1996 | DE | 4304779 A1 | 23-12-1993 |
| | | | JP | 6058195 A | 01-03-1994 |

EPO FORM P0460

Pour tout renseignement concernant cette annexe : voir Journal Officiel de l'Office européen des brevets, No.12/82